# EUROPÄISCHE PATENTSCHRIFT

(11) **EP 4 485 724 B1**
(45) Veröffentlichungstag und Bekanntmachung des Hinweises auf die Patenterteilung: **29.07.2026**
(21) Anmeldenummer: 24207369.0
(22) Anmeldetag: 18.05.2020
(51) Int. Cl.: F16L 3/10, H02G 3/32

(54) **HALTERUNG FÜR LANGGESTRECKTE GEGENSTÄNDE**
SUPPORT FOR ELONGATED OBJECTS
SUPPORT POUR OBJETS ELONGÉS

(30) Priorität: 26.06.2019 DE 102019117213
(43) Veröffentlichungstag der Anmeldung: 01.01.2025
(62) Teilanmeldung aus: 20175133.6
(73) Patentinhaber: Illinois Tool Works Inc., Glenview IL 60025 (US)
(72) Erfinder: Pfeiffer, Christian, Glenview, IL 60025 (US)
(74) Vertreter: HGF

(56) Entgegenhaltungen:
- WO-A1-2006/094609
- CN-A- 106 641 455
- CN-B- 101 435 519
- CN-B- 102 510 030
- DE-A1- 102004 063 364
- DE-A1- 3 637 738
- DE-B4- 3 642 958
- FR-A1- 2 960 618
- GB-A- 2 272 954

## Beschreibung

Die Erfindung betrifft eine Halterung für langgestreckte Gegenstände, wie Rohrleitungen, Kabel und dergleichen.

Es ist bekannt, Rohrleitungen, Kabel und dergleichen mit entsprechenden Halterungen sowohl in Gebäuden als auch in Kraftfahrzeugen, Luftfahrzeugen und dergleichen an Decken oder Wandungen festzulegen, um eine Kabel- oder Leitungsführung sicherzustellen. Hierbei sind auch Halterungen bekannt, die über einen Clip in einer Karosserieöffnung angeordnet werden und in die anschließend eine Leitung, Kabelstrang oder dergleichen eingelegt werden kann und welche dann manuell verschlossen werden und beispielsweise durch eine Verrastung im geschlossenen Zustand gehalten werden, so dass die Leitung, das Kabel oder dergleichen zuverlässig gehalten wird.

Darüber hinaus sind auch Halterungen für langgestreckte Gegenstände bekannt, die beim Einlegen des langgestreckten Gegenstandes mit dem Einlegevorgang geschlossen werden und bei denen die Schließung mit der Montage des Kabels oder der Leitung erfolgt.

Aus der US 4,591,285 A ist eine Halterung für Kabel oder Leitungen bekannt, bei der das Kabel oder die Leitungen in einer Aufnahmewanne eingelegt wird und beim Hineindrücken des Kabels oder Leitung die Wanne so verschwenkt, dass ein mit einem Rastelement versehenes freies Ende der Wanne mit einem freien Ende einer gegenüberliegenden Wandung der Halterung verrastend in Eingriff kommt.

Aus der US 5,535,969 A ist eine Haltevorrichtung für zwei voneinander separierte Leitung bekannt, bei der die Leitungen durch ein Schwert getrennt sind und an einem Schwenkarm ein weiteres, mit dem ersten Schwert interagierendes Schwert vorhanden ist, welche die Leitungen auseinanderdrücken, wobei zudem an dem Schwenkarm eine Rasteinrichtung derart angeordnet ist, dass die Leitungen allseitig von der Halterung begrenzt werden, wobei flexible Haltearme vorhanden sind, welche eine Lateralbewegung der Leitungen begrenzt.

Aus der US 5,772,758 A ist eine Haltevorrichtung bekannt, welche eine Leitung oder ein Kabel unter Pressung halten kann, wobei diese Einrichtung manuell geschlossen wird, indem zwei Sägezahnprofile eineinandergeschoben werden und miteinander verrasten, wobei durch elastische Rückstellkräfte der entsprechenden Arme, an den die Sägezahnprofile ausgebildet sind, eine Sicherung der Verriegelung erfolgen soll.

Aus der US 9,109,617 B2 ist eine weitere mögliche Ausführungsform einer automatisch schließenden Halterung bekannt, bei der eine Leitung, ein Kabel oder dergleichen in eine auf dem Durchmesser des Kabels oder der Leitung abgestimmten Wanne eingelegt wird, welche dann ebenfalls beim Zudrücken der Leitung oder des Kabels in den Körper der Halterung um ein Filmscharnier verschwenkt wird und wobei eine Rasteinrichtung an der Wanne mit einer Rasteinrichtung der gegenüberliegenden Wandung der Halterung verrastet.

Aus der DE 36 42 958 B4 sind einstückig geformte Klemmbügel bekannt.

Aus der GB 2 272 954 A geht ein verschließbarer Rohrhalter hervor.

In der DE 36 37 738 A1 ist ein Halteelement zur Halterung mindestens eines Rohres oder Kabels offenbart.

Aufgabe der Erfindung ist es, eine Halterung für Leitungen, Kabel oder dergleichen zu schaffen, die bei einem vergleichbaren einfachen Aufbau und damit einer vergleichbar einfachen Herstellung zuverlässig Kabel, Leitungen oder dergleichen auch mit unterschiedlichen Durchmessern zuverlässig festlegt.

Die Aufgabe wird mit einer Halterung mit den Merkmalen des Anspruchs 1 gelöst.

Vorteilhafte Weiterbildungen sind in den Unteransprüchen gekennzeichnet.

Erfindungsgemäß ist eine Halterung für langgestreckte Gegenstände wie eine Leitung, ein Kabel oder dergleichen so ausgebildet, dass bei einer hohen Rückstellkraft eine sichere automatische Verriegelung beim Einlegen eines langgestreckten Körpers erzielt wird, wobei zudem die Halterung erfindungsgemäß so ausgestaltet ist, dass Kabel, Leitungen oder andere langgestreckte Gegenstände auch mit unterschiedlichen Durchmessern eingelegt werden können, so dass die Halterung universell für die unterschiedlichsten Durchmesser geeignet ist, wobei die Kabel, Leitungen oder dergleichen in der Halterung zuverlässig und unter Spannung derart gehalten werden, dass es nicht zu unerwünschten Eigenbewegungen, Klappern und dergleichen kommt und zudem die langgestreckten Gegenstände immer zentriert gehalten werden. Insbesondere kann eine verbesserte Eigengeräuschdämpfung erzielt werden, was insbesondere bei der Elektromobilität wichtig ist.

Erfindungsgemäß besitzt die Halterung ein über ein Filmscharnier schwenkbares Verschlussteil, auf welches der langgestreckte Körper aufgelegt und in die Halterung hineingedrückt wird.

Hierbei verschwenkt das Verschlussteil derart, dass es in eine verrastende Verbindung mit einem ihrem Drehpunkt des Scharniers gegenüberliegenden Wandung kommt und dort mit einem Gegenrastmittel verrastet. In dieser Stellung steht von dem Verschlussteil einerseits und vom Boden der Halterung andererseits je eine elastische Leiste derart in Richtung der die Halterung nach oben abschließenden Wandung der Wanne vor, dass Kabel mit unterschiedlichem Durchmesser durch diese federnden Lippen, an die das Kabel abdeckende Wandung der Wandung angedrückt werden und dadurch einerseits die Rastverbindung sichern und andererseits zentriert festgelegt werden.

Somit betrifft die Erfindung insbesondere eine Halterung für langgestreckte Körper wie Leitungen, Kabel und dergleichen, wobei ein wannenartiger Grundkörper mit einer Basiswandung und zwei daran von abgehenden Seitenwandungen vorhanden ist, wobei an einer ersten Seitenwandung ein schwenkbares Verschlussteil angelenkt ist und an der zweiten Seitenwandung ein Verriegelungsteil angeordnet ist, wobei das schwenkbare Verschlussteil und das Verriegelungsteil korrespondierende Rastmittel besitzen, welche durch Verschwenken des Verschlussteils in Eingriff bringbar sind, wobei zur verschwenkenden Betätigung des Verschlussteils eine als Schwenkhebel dienende Wandung vorhanden ist, welche beim Auflegen und Eindrücken eine zu haltenden Gegenstandes das Rastmittel des Verschlussteils zum Rastmittel des Verriegelungsteils verschwenkt und mit diesem in Eingriff bringt, wobei zumindest eine federnde Leiste vorhanden ist, welche sich von dem Grundkörper und/oder der Wandung im verschlossenen Zustand in Richtung zum haltenden Gegenstand erstreckt.

Ferner kann es vorteilhaft sein, wenn sich zumindest eine federnde Leiste von der Basiswandung in verschlossenem Zustand in Richtung zum zu haltenden Gegenstand erstreckt.

Es ist darüber hinaus möglich, dass zwei federnde Leisten vorhanden sind, welche mit ihren Endbereichen divergieren um einen zu haltenden Körper an unterschiedlichen Bereichen mit einer elastischen Rückstellkraft zu beaufschlagen oder eine federnde Leiste vorhanden ist, welche sich mit zwei federnden voneinander divergierenden Endbereichen zu einem zu haltenden Körper erstreckt.

Vorteilhaft ist es insbesondere, dass das Verschlussteil, die als Schwenkhebel dienende ebene Wandung besitzt und bezogen auf das Scharnier um das die Verschwenkung erfolgt gegenüberliegend eine Halbkreisförmig gewölbte Bodenwandung vorhanden ist, an deren freien Ende das Rastmittel ausgebildet ist, sodass im geschlossenen Zustand die gewölbte Bogenwandung die Halterung gegenüber der Basiswandung abschließt.

Weiter ist es erfindungsgemäß möglich, dass an der Seitenwandung benachbart zur gewölbten Bogenwandung ein freies Ende der Wandung als Anschlag ausgebildet ist, der ein Verbiegen oder Verschwenken des Verschlussteils nach Außen begrenzt.

Erfindungsgemäß ist eine federnde Leiste an der ebenen Wandung angeordnet, wobei sich die federnde Leiste von einer dem Filmscharnier gegenüberliegenden Längskante der ebenen Wandung zurückgebogen entlang der ebenen Wandung erstreckt, wobei ein freies Ende der federnden Leiste zur ebenen Wandung hin konvergiert.

Bei einer vorteilhaften Ausführungsform ist das Verriegelungsteil von außen schräg auf das Verschlussteil zu ragend angeordnet und besitzt eine freie obere Kante, wobei von der Kante entfernt an einer Innenfläche des Verriegelungsteils eine Rastnut angeordnet ist, welche eine Raststufe ausbildet.

Bei einer weiteren vorteilhaften Ausführungsform ist an der Außenseite der Bogenwandung des Verschlussteils im Endbereich ein nach Außen weisender Rasthaken ausgebildet, wobei der Rasthaken eine freie Rastkante ausbildet, die einem freien Ende der Bogenwandung gegenüberliegend angeordnet ist.

In einer vorteilhaften Ausführungsform bilden der Rasthaken und dessen freie Kante einerseits und die Nut und die daraus gebildete Raststufe andererseits die korrespondierenden Rastmittel des Verschlussteils und des Verriegelungsteils aus.

Vorteilhafter Weise können der Rasthaken von seiner Rastkante aus und die Raststufe mit einem korrespondierenden Hinterschnitt derart ausgebildet sein, dass die Hinterschnitte bei der Verrastung ineinandergreifen.

Bei einer vorteilhaften Weiterbildung verfügen die nicht beweglichen Teile der Halterung und insbesondere die Basiswandung, die erste Seitenwandung und die zweite Seitenwandung zur Aussteifung über eine gemeinsame oder einer Mehrzahl von getrennten Versteifungsrippen, die außenseitig und orthogonal auf der Ebene der jeweiligen Wandung stehend sich nach Außen erstrecken und somit für eine Aussteifung sorgen.

Vorteilhafter Weise kann zwischen der Raststufe und der freien Kante das Verriegelungsteil eine Gleit- und Findungsfläche für das Aufnehmen und Führen einer Außenfläche des Rasthakens des Verschlussteils bilden.

Es ist ferner von Vorteil, wenn die Gleit- und Findungsfläche so verläuft bzw. derart angeordnet ist, dass beim Verschwenken des Verschlussteils eine Außenfläche des Rasthakens an der Findungsfläche entlang gleitet, wobei die Findungsfläche einen gewölbten Verlauf derart besitzt, dass das Verschlussteil bzw. die Bogenwandung elastisch gestaucht wird und nach dem Überstreichen der freien Kante der Raststufe in die Nut elastisch hineinfedert, und/oder sich das Verriegelungselement elastisch nach außen bewegt, was den gleichen Effekt bewirkt. Dies insbesondere auch, wenn sehr große Leistungsquerschnitte eingelegt werden, sodass die Bogenwandung nicht nachgeben kann.

In einer Weiterbildung kann an einer der Bogenwandung gegenüberliegenden Fläche der ebenen Wandung des Verschlussteils eine Anschlagleiste vorhanden sein, welche die Verschwenkung des Verschlussteils in den wannenartigen Grundkörper begrenzt.

Darüber hinaus kann das Verschlussteil mit dem Scharnier an einer Innenseite der ersten Seitenwandung angeordnet sein.

In einer Weiterbildung ist an der Innenfläche der ersten Seitenwandung beabstandet zur Basiswandung eine sich parallel zur Basiswandung erstreckende und von dieser beabstandete Scharnierpodestleiste angeordnet, wobei auf der Scharnierpodestleiste beabstandet zur Seitenwandung auf einer der Basiswandung gegenüberliegenden Wandung das sich im Wesentlichen in gleicher Richtung wie die Seitenwandung erstreckendes Filmscharnier zur gelenkigen Anordnung des Verschlussteils angeordnet ist.

Schließlich kann an der Halterung ein Verbindungsmittel zum Verbinden mit einer Gebäudewandung, einer Gebäudedecke, einer Karosseriewandung oder anderen festen Einrichtungen eines Fahrzeuges, Luftfahrzeuges oder Gebäudes angeordnet sein.

Die Erfindung wird anhand einer Zeichnung beispielhaft erläutert. Es zeigen dabei:

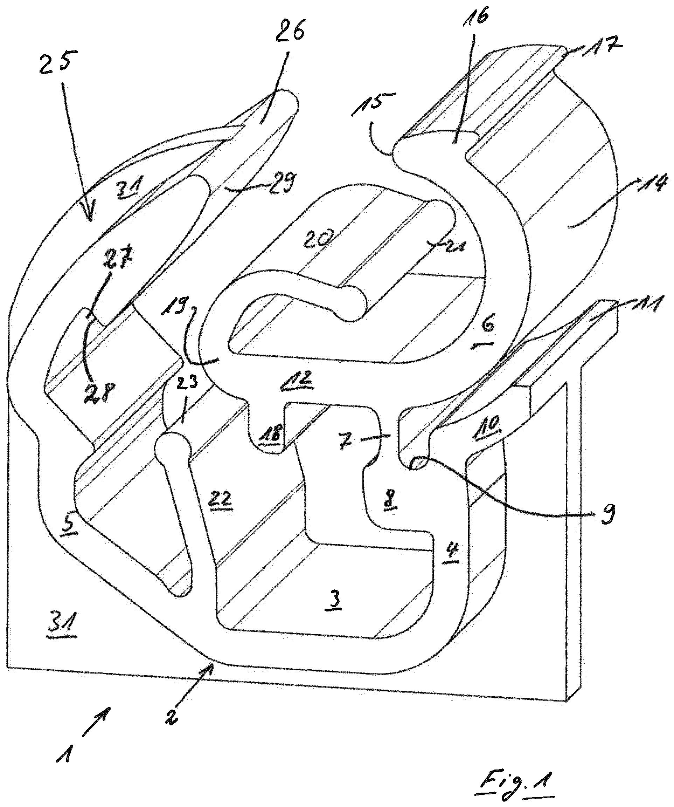

- Figur 1: eine Ausführungsform der erfindungsgemäßen Halterung in einer perspektivischen Ansicht;

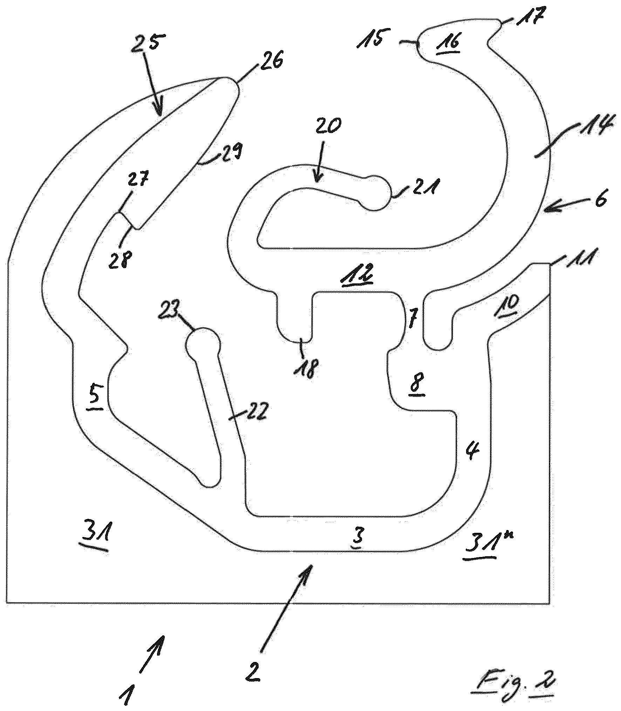

- Figur 2: die Halterung nach Figur 1 in einer Seitenansicht;

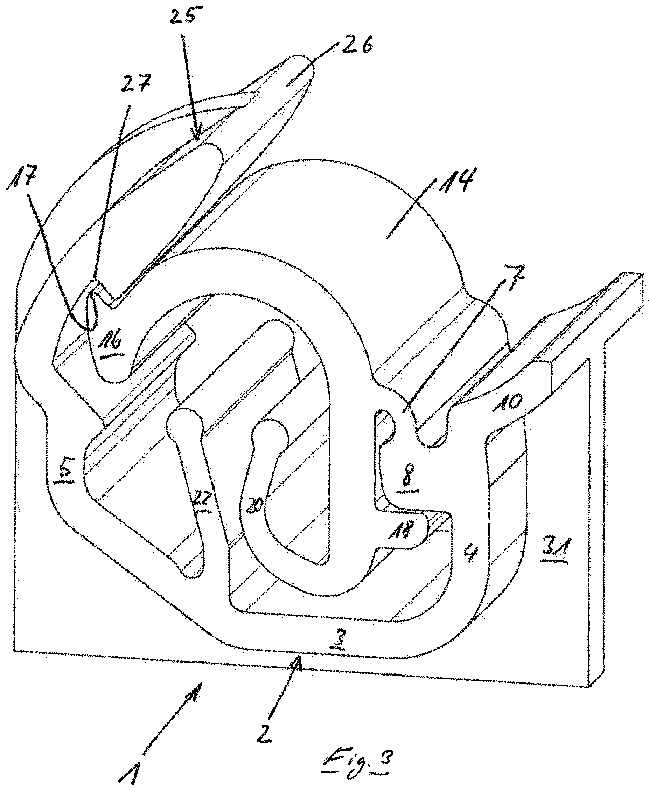

- Figur 3: die Halterung nach Figur 1 in geschlossenem und verriegeltem Zustand;

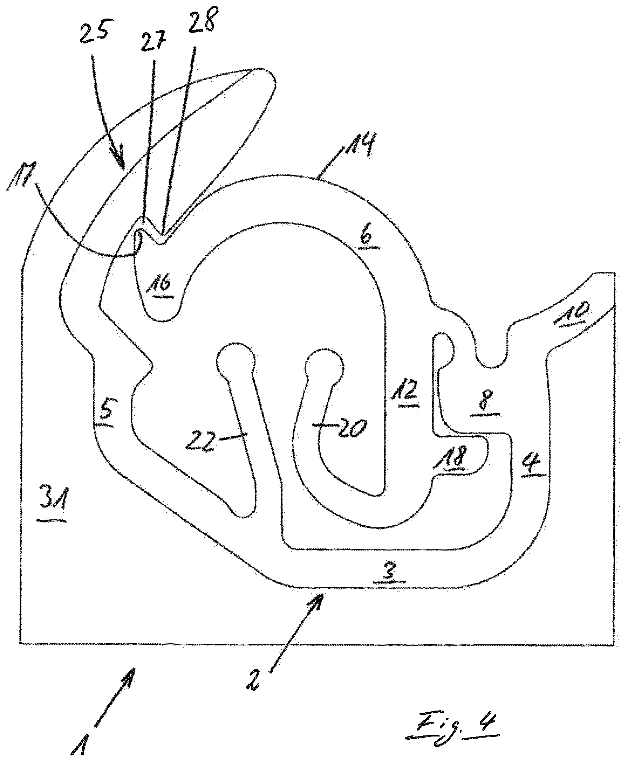

- Figur 4: die Halterung nach Figur 3 in einer Seitenansicht;
- Figur 5: eine Seitenansicht der geschlossenen Halterung mit einem darin angeordneten langgestreckten Körper;
- Figur 6: die Halterung nach Figur 5 mit einem Durchmesser stärkeren langgestreckten Körper in geschlossenem Zustand.

Die erfindungsgemäße Halterung 1 für langgestreckte Körper, wie Leitungen, Kabel und dergleichen besitzt einen wannenartigen Grundkörper mit einer Basiswandung 3 und einer davon abgehenden Seitenwandung 4 und eine zweite Seitenwandung 5.

An der ersten Seitenwandung 4 ist ein schwenkbares Verschlussteil angelenkt, welches an einem freien Ende einen nach außen weisenden Rasthaken aufweist.

An der gegenüberliegenden Seitenwandung 5 ist ein Verriegelungsteil mit einem Gegenrastmittel für den Rasthaken ausgebildet, so dass beim Verschwenken des Verschlussteils, insbesondere um 90°, der nach außen weisende Rasthaken mit dem Rastmittel des Verriegelungsteiles der gegenüberliegenden Wandung in Eingriff gerät. Dies wird näher erläutert.

An der ersten Seitenwandung 4 ist beabstandet zur Basiswandung 3 ein Verschlussteil 6 mit einem Scharnier angelenkt, wobei das Scharnier 7 an einer Innenseite der ersten Seitenwandung 4 angeordnet ist.

Insbesondere ist an der Innenfläche der ersten Seitenwandung 4, beabstandet zur Basiswandung 3, eine sich parallel zur Basiswandung 3 erstreckende und von dieser beabstandete Scharnierpodestleiste 8 angeordnet. Auf der Scharnierpodestleiste 8 ist beabstandet zur Seitenwandung 4 auf einer der Basiswandung 3 gegenüberliegenden Wandung 9 ein sich im Wesentlichen in gleicher Richtung wie die Seitenwandung 4 erstreckendes Filmscharnier 7 angeordnet.

An dem Filmscharnier 7 ist das Verschlussteil 6 angeordnet.

Um ein Verschwenken des Verschlussteils 6 nach außen zu begrenzen, erstreckt sich ein Anschlag 10 der Seitenwandung 4 ein Stück schräg nach außen und endet mit einem freien Ende 11 der Seitenwandung 4.

Das Verschlussteil 6 besitzt einen ebenen Wandungsabschnitt 12, der sich vom Filmscharnier 7 zur zweiten Seitenwandung 5 hin erstreckt und in der Ausgangsstellung der Halterung in etwa parallel zur Basiswandung 3 verläuft.

Zur ersten Seitenwandung 4 hin und zum Anschlag 10 hin erstreckt sich eine halbkreisförmig gewölbte Bogenwandung 14, deren freies Ende 15 folgerichtig zur gegenüberliegenden zweiten Seitenwandung 5 hin gerichtet ist. An der Außenseite der Bogenwandung 14 ist im Endbereich ein nach außen und oben weisender Rasthaken 16 ausgebildet. Die Rastkante 17 des Rasthakens 16 ist dem freien Ende 15 somit diametral gegenüberliegend an der Bogenwandung 14 angeordnet.

Beabstandet vom Filmscharnier 7 ist unterseitig an dem ebenen Wandungsabschnitt 12 eine Begrenzungsleiste 18 ausgebildet. Die Scharnierpodestleiste 8 ist korrespondierend zu der Begrenzungsleiste 18 ausgebildet um in ungünstigen Lastfällen das Film-Scharnier entsprechend zu unterstützen, um einen gewissen Anteil von angreifenden Kräften aufzunehmen.

Der ebene Wandungsabschnitt 12, der sich vom Filmscharnier zur zweiten Seitenwandung hin erstreckt, dient als Verschwenk- oder Betätigungshebel zur Verschwenkung des Verschlussteiles 6.

An einer der Bogenwandung 14 gegenüberliegenden Längskante bzw. einem Längskantenbereich 19 des ebenen Wandungsabschnitts 12 ist eine erste federnde Leiste 20 angeordnet. Die federnde Leiste erstreckt sich dabei ein Stück vom ebenen Wandungsabschnitt weg und ist dann zur Bogenwandung hin und zum ebenen Wandungsabschnitt hin gebogen angeordnet, so dass eine freie Längskante 21 der federnden Leiste 20 näher an der Bogenwandung 14 als dem Längskantenabschnitt 19 ist und sich gegenüber dem maximalen Abstand der federnden Leiste in der Wölbung weg vom Längskantenabschnitt 19 zum ebenen Wandungsabschnitt 12 hin orientiert ist.

An der Basiswandung 3 ist eine zweite federnde Leiste 22 angeordnet, welche sich von der Basiswandung 3 leicht schräg nach außen erstreckt und mit einer freien Kante 23 näher zur zweiten Seitenwandung 5 hin orientiert ist als der Ausgangsbereich der zweiten federnden Leiste an der Basiswandung 3.

An der Seitenwandung 5 ist ein Verriegelungsteil 25 angeordnet. Das Verriegelungsteil 25 ragt von außen schräg auf das Verschlussteil 6 zu und besitzt eine freie obere Kante 26. Von der Kante 26 entfernt ist an einer Innenfläche des Verriegelungsteils 25 eine Rastnut 27 eingebracht, welche eine Raststufe 28 bildet. Zwischen der Raststufe 28 und der freien Kante 26 bildet das Verriegelungsteil eine Gleit- und Findungsfläche 29 aus.

Die Seitenwandung 5 kann, wie im dargestellten Beispiel gezeigt, über eine unregelmäßige Form und unterschiedliche Neigungen verfügen.

Dem Fachmann ist jedoch klar, dass die Seitenwandung 5 auch in zur Seitenwandung 4 paralleler Weise sich orthogonal von der Basiswandung 3 weg erstrecken kann. Die Raumform sowohl der Seitenwandungen 4, 5 als auch der Basiswandung 3 sind weitgehend beliebig, solang die Funktionalität des Verschlussteils 6 und des Verriegelungsteils 25 sowie der federnden Leisten 20, 22 gewährleistet ist.

Dies betrifft auch die Anlenkung des Verschlussteils 6 an der Seitenwandung. Der Fachmann versteht, dass die Anlenkung solange in einer beliebigen Weise ausgeführt werden kann, wie eine Verschwenkung des Verschlussteils 6 um etwa 90° in den wannenartigen Grundkörper 2 der Halterung 1 ermöglicht ist.

Die Ausführung mit zwei federnden Leisten ist optional. Zur Ausführung der Erfindung ist eine federnde Leiste 20, 22, ggf. ausreichend, wobei die eine federnde Leiste an der Basiswandung 3 oder dem ebenen Wandungsabschnitt 12 oder der zweiten Seitenwand 5 angeordnet sein kann.

Darüber hinaus kann die jeweils eine federnde Leiste sich mit divergierenden Endbereichen teilen, sodass die federnde Leiste im Querschnitt, beispielsweise y-förmig, ausgebildet ist. Eine solche einzelne federnde Leiste kann ebenfalls an der Basiswandung 3 oder dem ebenen Wandungsabschnitt 12 ausgebildet sein.

Darüber hinaus können am Verriegelungsteil 25 auch eine Mehrzahl von aufeinanderfolgenden Raststufen 28 angeordnet sein, um noch flexibler auf unterschiedliche Durchmesser von langgestreckten Körpern reagieren zu können.

Die exakte Ausführung des Rasthakens 16 einerseits und der Nut 27 und damit der Raststufe 28 ist ebenfalls solange beliebig, wie Rasthaken 16 und Raststufe 18 korrespondierend wirken und miteinander in Eingriff bringbar sind.

Insbesondere können die Nut 27 und damit die Raststufe 28 einerseits als auch der Rasthaken 16 von seiner Rasthakenkante 17 andererseits ausgehend mit einem Hinterschnitt ausgebildet sein, welcher das Herausrutschen der Rasten zusätzlich erschwert.

Die nicht beweglichen Teile, d.h., die nicht für eine Bewegung vorgesehenen Teile der Halterung 1 und insbesondere die Basiswandung 3, die erste Seitenwandung 4 und die zweite Seitenwandung 5 können zur Aussteifung über eine gemeinsame oder getrennte Versteifungsrippe 31 wirken, die außenseitig und orthogonal auf der Ebene der jeweiligen Wandung stehend sich nach außen erstreckt und somit für eine Aussteifung sorgt.

Über die Versteifungsrippe 31 oder weitere Anbauteile kann die Halterung 1 auch mit anderen Bauteilen verbunden oder einstückig ausgebildet sein, insbesondere Verbindungsmitteln mit einer Karosserie, einem Gebäude oder dergleichen.

Nachfolgend wird die Funktion dieser Ausführungsform näher erläutert.

Die Kanten 15 des Verschlussteils 6 und die Kante 26 des Verriegelungsteils 25 definieren zwischen sich eine Öffnung für einen aufzunehmenden und zu haltenden, langgestreckten Körper 30.

Wird ein langgestreckter Körper 30 in die Halterung 1 eingebracht, indem er an den freien Kanten 15, 26 vorbeigeführt wird, gerät dieser auf die federnde Leiste 20 oder den als Schwenkhebel dienenden Wandungsabschnitt 12, wobei bei weiterem Druck das Verschlussteil 6 um das Filmscharnier 7 herum verschwenkt wird, so dass der Rasthaken 16 mit seiner Kante 15 voran auf die Kante 26 des Verriegelungsteils verschwenkt wird und die Anschlagleiste 18 auf die Seitenwandung 4 hin. Während der Verschwenkbewegung gerät der Rasthaken 16 mit seiner Außenfläche zwischen den Kanten 15, 17 an die Gleit- und Findungsfläche 29 des Verriegelungsteils 25 und gleitet an dieser solange entlang, bis die Rasthakenkante 17 in den Bereich der Nut 27 und insbesondere der Stufe 28 gelangt. Durch eine Einwärtswölbung der Gleit- und Findungsfläche 29 wird hierbei der Rasthaken 16 auch auf die ebene Wandung 12 zu verbogen und federt dann mit seiner Kante 17 in die Nut 27 hinein und/oder das Verriegelungsteil 25 biegt sich zusätzlich etwas nach außen weg, was den gleichen Effekt bewirkt. In diesem Zustand liegt die Anschlagleiste 18 unterhalb der Scharnierpodestleiste 8 an dieser oder/und an der ersten Seitenwandung 4 an.

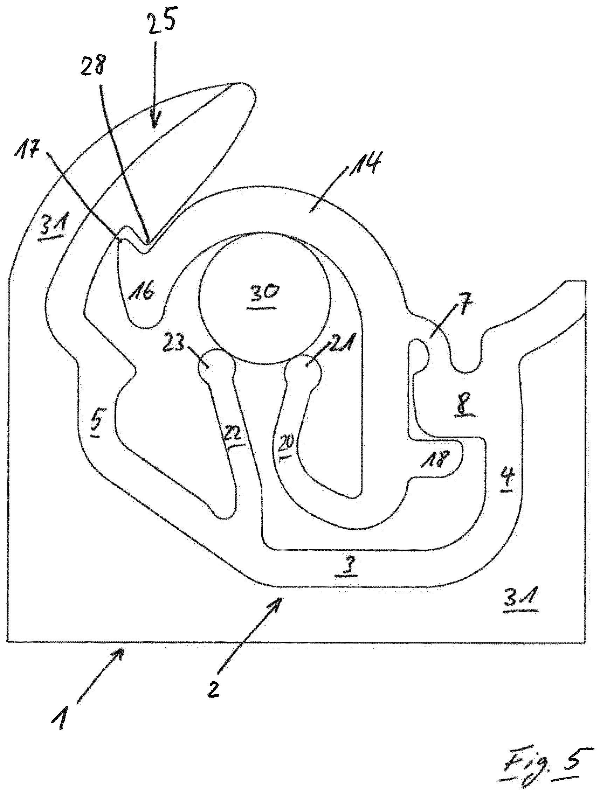

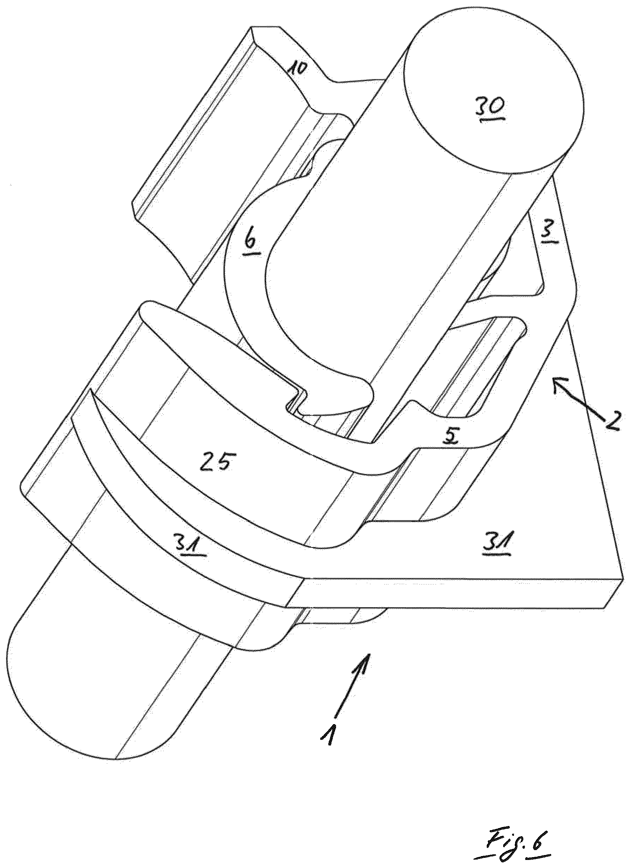

Gegebenenfalls liegt auch der ebene Wandungsabschnitt 12 an der Scharnierpodestleiste 8 an. In diesem Zustand dient die Bogenwandung 14 als oberseitige Abdeckung eines nun geschlossenen Innenraums, der durch den Grundkörper 2 und die Bogenwandung 14 begrenzt wird. Die erste federnde Leiste und die zweite federnde Leiste weisen mit ihren freien Kanten 21, 23 hierbei in Richtung der Bogenwandung 14, wobei die freien Kanten 21, 23, bzw. die erste federnde Leiste und die zweite federnde Leiste voneinander divergieren. Dies ermöglicht, dass die erste federnde Leiste 20 und die zweite federnde Leiste 22 abhängig vom Durchmesser eines langgestreckten Körpers in Richtung auf den ebenen Wandungsabschnitt 12 zu federn können (im Falle der ersten federnden Leiste) und auf die Seitenwandung 5 zu federn können (im Falle der zweiten federnden Leiste 22). Die freien Kanten 21, 23 der beiden federnden Leisten 20, 22 (Figur 5) wirken somit elastisch drückend auf einen langgestreckten Körper 30, so dass dieser an die Bogenwandung 14 gedrückt wird und gleichzeitig der Rasthaken 16 in die Nut 27 gedrückt wird (Figuren 5, 6).

Dies ermöglicht einerseits eine sehr leichte und unkomplizierte Montage eines langgestreckten Körpers 30 in der Halterung 1, zudem kann über die beiden federnden Leisten eine sichere, spielfreie Festlegung des langgestreckten Körpers 30 in der Halterung erzielt werden und zudem wirkt die von den federnden Leisten 20, 22 ausgeübte Kraft auf den langgestreckten Körper 30 und damit mittelbar auf die Bogenwandung 14 einer Lösung des Rasteingriffs zwischen dem Rasthaken 16 und der Nut 27 entgegen. Somit wird eine einfache, sicher funktionierende, zuverlässige und langlebige Halterung für einen langgestreckten Körper 30 geschaffen.

Die beiden federnden Leisten bewirken durch die wirkende Vorspannung einen Gewissen Widerstand durch Reibung gegen axiale Verschiebung entlang der Leitungsrichtung - den Punkt nach Möglichkeit noch in die erklärenden Ausführungen integrieren.

Die federnden Leisten 20, 22 bewirken durch die Vorspannung mit der sie auf einen längsgestreckten Körper so wirken auch einen hohen Widerstand aufgrund von Reibung, sodass zusätzlich ein festlegender Effekt in axiale Richtung als langgestreckten Körper 30 bewirkt wird.

Insbesondere wird eine ungewollte axiale Verschiebung des Körpers 30 verhindert.

### Bezugszeichen

- 1: Halterung
- 2: Grundkörper
- 3: Basiswandung
- 4: erste Seitenwandung
- 5: zweite Seitenwandung
- 6: Verschlussteil
- 7: Scharnier
- 8: Scharnierpodestleiste
- 9: Wandung von 8
- 10: nach außen erstreckter Wandungsabschnitt
- 11: freies Ende
- 12: ebener Wandungsabschnitt
- 14: Bogenwandung
- 15: freies Ende
- 16: Rasthaken
- 17: Rasthakenkante
- 18: Begrenzungsleiste
- 19: Längskantenabschnitt
- 20: erste federnde Leiste
- 21: freie Kante
- 22: zweite federnde Leiste
- 23: freie Kante
- 25: Verriegelungsteil
- 26: freie Kante
- 27: Nut
- 28: Raststufen
- 29: Gleit- und Findungsfläche
- 30: langgestreckter Körper

## Patentansprüche

1. Halterung für langgestreckte Körper wie Leitungen, Kabel und dergleichen, wobei die Halterung einen wannenartigen Grundkörper (2) mit einer Basiswandung (3) und zwei von daran abgehenden Seitenwandungen (4,5) aufweist, wobei an einer ersten Seitenwandung (4) der Seitenwandungen (4,5) ein schwenkbares Verschlussteil (6) über ein Filmscharnier (7) angelenkt ist und an der zweiten Seitenwandung ein Verriegelungsteil (25) angeordnet ist, wobei das schwenkbare Verschlussteil (6) und das Verriegelungsteil (25) korrespondierende Rastmittel (16,17;27,28) besitzen, welche durch Verschwenken des Verschlussteils (6) in Eingriff bringbar sind, wobei zur verschwenkenden Betätigung des Verschlussteils (6) eine als Schwenkhebel dienende ebene Wandung (12) vorhanden ist, welche beim Auflegen und Eindrücken eines zu haltenden Gegenstandes das Rastmittel (16) des Verschlussteils (6) zum Rastmittel (27) des Verriegelungsteils (25) verschwenkt und mit diesem in Eingriff bringt, wobei zumindest eine federnde Leiste (20,22) vorhanden ist, welche sich von dem Grundkörper (2) und/oder der als Schwenkhebel dienenden ebenen Wandung (12) im verschlossenen Zustand in Richtung zum haltenden Gegenstand erstreckt, wobei eine erste federnde Leiste (20) der zumindest einen federnden Leiste (20,22) an der als Schwenkhebel dienenden ebenen Wandung (12) angeordnet ist, **dadurch gekennzeichnet, dass** sich die erste federnde Leiste (20) von einer dem Filmscharnier (7) gegenüberliegenden Längskante der Schwenkhebel dienenden ebenen Wandung (12) zurückgebogen entlang der **als** Schwenkhebel dienenden ebenen Wandung (12) erstreckt, wobei ein freies Ende (21) der federnden Leiste (20) zur **als** Schwenkhebel dienenden ebenen Wandung (12) hin konvergiert.

2. Halterung nach Anspruch 1, **dadurch gekennzeichnet, dass** sich eine zweite federnde Leiste (22) der zumindest einen federnden Leiste (20,22) von der Basiswandung (3) oder der zweiten Seitenwand (5) in verschlossenem Zustand in Richtung zum zu haltenden Gegenstand erstreckt.

3. Halterung nach Anspruch 2, **dadurch gekennzeichnet, dass** die federnden Leisten (20,22) mit ihren Endbereichen divergieren, um einen zu haltenden Körper an unterschiedlichen Bereichen mit einer elastischen Rückstellkraft zu beaufschlagen, oder nach Anspruch 1, **dadurch gekennzeichnet, dass** die erste federnde Leiste (20) sich mit zwei federnden, voneinander divergierenden Endbereichen zu einem zu haltenden Körper (30) erstreckt.

4. Halterung nach einem der vorhergehenden Ansprüche, **dadurch gekennzeichnet, dass** das Verschlussteil (6) die als Schwenkhebel dienende ebene Wandung (12) besitzt und bezogen auf das Scharnier (7), um das die Verschwenkung erfolgt, gegenüberliegend eine halbkreisförmig gewölbte Bodenwandung (14) aufweist, an deren freiem Ende das Rastmittel (16) ausgebildet ist, sodass im geschlossenen Zustand die gewölbte Bogenwandung (14) die Halterung gegenüber der Basiswandung (3) abschließt.

5. Halterung nach einem der vorhergehenden Ansprüche, **dadurch gekennzeichnet, dass** an der ersten Seitenwandung (4) benachbart zur gewölbten Bogenwandung (14) ein freies Ende der ersten Seitenwandung (4) als Anschlag (10) ausgebildet ist, der ein Verbiegen oder Verschwenken des Verschlussteils (6) nach außen begrenzt.

6. Halterung nach einem der vorhergehenden Ansprüche, **dadurch gekennzeichnet, dass** das Verriegelungsteil (25) von außen schräg auf das Verschlussteil (6) zu ragend angeordnet ist und eine freie obere Kante (26) besitzt, wobei von der freien oberen Kante (26) entfernt an einer Innenfläche des Verriegelungsteils (20) eine Rastnut (27) angeordnet ist, welche eine Raststufe (28) ausbildet.

7. Halterung nach Anspruch 6, **dadurch gekennzeichnet, dass** an der Außenseite der Bogenwandung (14) des Verschlussteils (6) im Endbereich ein nach außen weisender Rasthaken (16) als Rastmittel ausgebildet ist, wobei der Rasthaken (16) eine freie Rastkante (17) ausbildet, die einem freien Ende (15) der Bogenwandung (14) gegenüberliegend angeordnet ist, wobei der Rasthaken (16) und dessen freie Kante (17) einerseits und die Rastnut (27) und die daraus gebildete Raststufe (28) andererseits die korrespondierenden Rastmittel des Verschlussteils(6) und des Verriegelungsteils (25) ausbilden.

8. Halterung nach Anspruch 7, **dadurch gekennzeichnet, dass** der Rasthaken (16) von seiner Rastkante (17) aus und die Raststufe (28) mit einem korrespondierenden Hinterschnitt derart ausgebildet sind, dass die Hinterschnitte bei der Verrastung ineinandergreifen.

9. Halterung nach einem der vorhergehenden Ansprüche, **dadurch gekennzeichnet, dass** die nicht beweglichen Teile der Halterung (1) und insbesondere die Basiswandung (3), die erste Seitenwandung (4) und die zweite Seitenwandung (5) zur Aussteifung über eine gemeinsame oder einer Mehrzahl von getrennten Versteifungsrippen (31) verfügen, die außenseitig und orthogonal auf der Ebene der jeweiligen Wandung (3,4,5,25) stehend sich nach außen erstrecken und somit für eine Aussteifung sorgen.

10. Halterung nach Anspruch 6 oder einem der vorhergehenden Ansprüche, soweit auf Anspruch 6 rückbezogen, **dadurch gekennzeichnet, dass** zwischen der Raststufe (28) und der freien Kante (26) das Verriegelungsteil (25) eine Gleit- und Findungsfläche (29) für das Aufnehmen und Führen einer Außenfläche des Rasthakens (16) des Verschlussteils (6) bildet.

11. Halterung nach Anspruch 10, **dadurch gekennzeichnet, dass** die Gleit- und Findungsfläche (29) so verläuft bzw. derart angeordnet ist, dass beim Verschwenken des Verschlussteils (6) eine Außenfläche des Rasthakens (16) an der Findungsfläche (29) entlang gleitet, wobei die Findungsfläche (29) einen gewölbten Verlauf derart besitzt, dass das Verschlussteil (6) bzw. die Bogenwandung (14) elastisch gestaucht wird und nach dem Überstreichen der freien Kante (16) der Raststufe (28) in die Nut (27) elastisch hineinfedert und/oder sich das Verriegelungsteil (25) elastisch nach außen bewegt.

12. Halterung nach Anspruch 4 oder einem der vorhergehenden Ansprüche, soweit auf Anspruch 4 rückbezogen, **dadurch gekennzeichnet, dass** an einer der Bogenwandung (14) gegenüberliegenden Fläche der als Schwenkhebel dienenden ebenen Wandung (12) des Verschlussteils (6) eine Anschlagleiste (18) vorhanden ist, welche die Verschwenkung des Verschlussteils (6) in den wannenartigen Grundkörper (2) begrenzt.

13. Halterung nach einem der vorhergehenden Ansprüche, **dadurch gekennzeichnet, dass** an der Innenfläche der ersten Seitenwandung (4) beabstandet zur Basiswandung (3) eine sich parallel zur Basiswandung (3) erstreckende und von dieser beabstandete Scharnierpodestleiste (8) angeordnet ist, wobei auf der Scharnierpodestleiste (8) beabstandet zur Seitenwandung (4) auf einer der Basiswandung (3) gegenüberliegenden Wandung (9) das sich im Wesentlichen in gleicher Richtung wie die Seitenwandung (4) erstreckendes Filmscharnier (7) zur gelenkigen Anordnung des Verschlussteils (6) angeordnet ist.

14. Halterung nach einem der vorhergehenden Ansprüche, **dadurch gekennzeichnet, dass** an der Halterung ein Verbindungsmittel zum Verbinden mit einer Gebäudewandung, einer Gebäudedecke, einer Karosseriewandung oder anderen festen Einrichtungen eines Fahrzeuges, Luftfahrzeuges oder Gebäudes angeordnet ist.

## Claims

1. A bracket for elongated bodies such as leads, cables, and the like,
wherein the bracket comprises a trough-like base body (2) with a base wall (3) and two side walls (4,5) extending therefrom, wherein a pivotable closure part (6) is articulated on a first side wall (4) of the side walls (4,5) via a film hinge (7) and a locking part (25) is arranged on the second side wall, wherein the pivotable closure part (6) and the locking part (25) have corresponding latching means (16,17;27,28), which can be brought into engagement by pivoting the closure part (6), wherein, for pivoting actuation of the closure part (6), a planar wall (12) serving as a pivot lever is present, which, when placing and pressing in an object to be held, pivots the latching means (16) of the closure part (6) toward the latching means (27) of the locking part (25) and brings it into engagement therewith, wherein at least one elastic support (20,22) is present, which, in a closed state, extends from the base body (2) and/or the planar wall (12) serving as a pivot lever, toward the object to be held, wherein a first elastic support (20) of the at least one elastic support (20,22) is arranged on the planar wall (12) serving as a pivot lever, **characterized in that** the first elastic support (20), bent back from a longitudinal edge of the planar wall (12) serving as a pivot lever, the longitudinal edge being opposite the film hinge (7), extends along the planar wall (12) serving as a pivot lever, wherein a free end (21) of the elastic support (20) converges toward the planar wall (12) serving as a pivot lever.

2. The bracket according to claim 1, **characterized in that**, in a closed state, a second elastic support (22) of the at least one elastic support (20,22) extends from the base wall (3) or the second side wall (5) toward the object to be held.

3. The bracket according to claim 2, **characterized in that** the elastic supports (20,22) diverge with their end regions in order to exert an elastic return force in various regions on a body to be held, or according to claim 1, **characterized in that** the first elastic support (20) extends with two elastic, diverging end regions to a body (30) to be held.

4. The bracket according to any one of the preceding claims, **characterized in that** the closure part (6) has the planar wall (12) serving as a pivot lever and, opposite therefrom with respect to the hinge (7) about which the pivoting takes place, has a semicircularly arched bottom wall (14), at the free end of which the latching means (16) is formed so that, in a closed state, the arched bow wall (14) closes off the bracket relative to the base wall (3).

5. The bracket according to any one of the preceding claims, **characterized in that**, on the first side wall (4) and adjacent to the arched bow wall (14), a free end of the first side wall (4) is formed as a stop (10), which limits bending or pivoting of the closure part (6) outward.

6. The bracket according to any one of the preceding claims, **characterized in that** the locking part (25) is arranged so as to project from the outside at an angle toward the closure part (6) and has a free upper edge (26), wherein, on an inner surface of the locking part (20), a latching groove (27) is arranged remotely from the free upper edge (26) and forms a latching step (28).

7. The bracket according to claim 6, **characterized in that**, on the outside of the bow wall (14) of the closure part (6), a latching hook (16) pointing outward is formed as a latching means in the end region, wherein the latching hook (16) forms a free latching edge (17), which is arranged opposite a free end (15) of the bow wall (14), wherein the latching hook (16) and its free edge (17), on the one hand, and the latching groove (27) and the latching step (28) formed therefrom, on the other hand, form the corresponding latching means of the closure part (6) and the locking part (25).

8. The bracket according to claim 7, **characterized in that** the latching hook (16), from its latching edge (17), and the latching step (28) are formed with a corresponding undercut such that the undercuts interlock upon latching.

9. The bracket according to any one of the preceding claims, **characterized in that**, for stiffening, the non-moving parts of the bracket (1), in particular the base wall (3), the first side wall (4), and the second side wall (5), have a common or a plurality of separate stiffening ribs (31), which, on the outside and orthogonally to the plane of the respective wall (3,4,5,25), extend outward and thus provide stiffening.

10. The bracket according to claim 6 or according to any one of the preceding claims, to the extent that it refers to claim 6, **characterized in that**, between the latching step (28) and the free edge (26), the locking part (25) forms a sliding and finding surface (29) for receiving and guiding an outer surface of the latching hook (16) of the closure part (6).

11. The bracket according to claim 10, **characterized in that** the sliding and finding surface (29) extends or is arranged in such a way that, when the closure part (6) is pivoted, an outer surface of the latching hook (16) slides along the finding surface (29), wherein the finding surface (29) has an arched profile such that the closure part (6) or the bow wall (14) is elastically clinched and, after passing the free edge (16) of the latching step (28), is elastically deflected into the groove (27), and/or the locking part (25) moves elastically outward.

12. The bracket according to claim 4 or according to any one of the preceding claims, to the extent that it refers to claim 4, **characterized in that**, on a surface of the planar wall (12) of the closure part (6) opposite the bow wall (14), the planar wall serving as a pivot lever, a stop support (18) is present, which limits the pivoting of the closure part (6) into the trough-like base body (2).

13. The bracket according to any one of the preceding claims, **characterized in that**, on the inner surface of the first side wall (4) and spaced apart from the base wall (3), a hinge platform support (8) extending parallel to the base wall (3) and spaced apart therefrom is arranged, wherein, on the hinge platform support (8) and spaced apart from the side wall (4), on a wall (9) opposite the base wall (3), the film hinge (7) is arranged, which extends substantially in the same direction as the side wall (4), for the hinged arrangement of the closure part (6).

14. The bracket according to any one of the preceding claims, **characterized in that** a connection means for connecting to a building wall, a building ceiling, a body wall, or other fixed devices of a vehicle, of an aircraft, or of a building is arranged on the bracket.

## Revendications

1. Console pour corps allongés tels que fils, câbles et analogues,
dans lequel la console comprend un corps de base en forme de creux (2) avec une paroi de base (3) et deux parois latérales (4,5) s'étendant à partir de celle-ci, dans lequel une partie de fermeture pivotante (6) est articulée sur une première paroi latérale (4) des parois latérales (4,5) par l'intermédiaire d'une articulation pelliculaire (7) et une partie de verrouillage (25) est disposée sur la deuxième paroi latérale, dans lequel la partie de fermeture pivotante (6) et la partie de verrouillage (25) présentent des moyens d'encliquetage correspondants (16,17 ;27,28), qui peuvent être mis en prise en pivotant la partie de fermeture (6), dans lequel, pour l'actionnement en pivotement de la partie de fermeture (6), une paroi plane (12) servant de levier de pivotement est prévue, qui, lors de la mise en place et de l'enfoncement d'un objet à maintenir, fait pivoter les moyens d'encliquetage (16) de la partie de fermeture (6) vers les moyens d'encliquetage (27) de la partie de verrouillage (25) et les met en prise avec ceux-ci, dans lequel au moins un support élastique (20,22) est prévu, qui, à l'état fermé, s'étend depuis le corps de base (2) et/ou la paroi plane (12) servant de levier de pivotement, vers l'objet à maintenir, dans lequel un premier support élastique (20) dudit au moins un support élastique (20,22) est disposé sur la paroi plane (12) servant de levier de pivotement, **caractérisé en ce que** le premier support élastique (20), replié à partir d'un bord longitudinal de la paroi plane (12) servant de levier de pivotement, le bord longitudinal étant opposé à la charnière à film (7), s'étend le long de la paroi plane (12) servant de levier de pivotement, dans lequel une extrémité libre (21) du support élastique (20) converge vers la paroi plane (12) servant de levier de pivotement.

2. Console selon la revendication 1, **caractérisée en ce qu'**à l'état fermé, un deuxième support élastique (22) de l'au moins un support élastique (20,22) s'étend depuis la paroi de base (3) ou la deuxième paroi latérale (5) vers l'objet à maintenir.

3. Console selon la revendication 2, **caractérisée en ce que** les supports élastiques (20,22) divergent par leurs régions d'extrémité pour exercer une force de rappel élastique dans différentes régions sur un corps à maintenir, ou selon la revendication 1, **caractérisée en ce que** le premier support élastique (20) s'étend avec deux régions d'extrémité élastiques divergentes vers un corps (30) à maintenir.

4. Console selon l'une quelconque des revendications précédentes, **caractérisée en ce que** la partie de fermeture (6) présente la paroi plane (12) servant de levier pivotant et, à l'opposé de celle-ci par rapport à l'articulation (7) autour de laquelle s'effectue le pivotement, une paroi inférieure arquée en demi-cercle (14) à l'extrémité libre de laquelle sont formés les moyens d'encliquetage (16), de telle sorte que, dans un état fermé, la paroi d'arc arquée (14) ferme la console par rapport à la paroi de base (3).

5. Console selon l'une quelconque des revendications précédentes, **caractérisée en ce que**, sur la première paroi latérale (4) et adjacente à la paroi d'arc arquée (14), une extrémité libre de la première paroi latérale (4) est formée en tant que butée (10), qui limite la flexion ou le pivotement de la partie de fermeture (6) vers l'extérieur.

6. Console selon l'une quelconque des revendications précédentes, **caractérisée en ce que** la partie de verrouillage (25) est disposée de manière à faire saillie depuis l'extérieur en formant un angle vers la partie de fermeture (6) et présente un bord supérieur libre (26), dans laquelle une rainure d'encliquetage (27) est agencée à distance du bord supérieur libre (26), sur une surface intérieure de la partie de verrouillage (20), et forme un gradin d'encliquetage (28).

7. Console selon la revendication 6, **caractérisée en ce que**, sur le côté extérieur de la paroi d'arc (14) de la partie de fermeture (6), un moyen d'encliquetage (16) dirigé vers l'extérieur est formé comme moyen d'encliquetage dans la région d'extrémité, dans laquelle le crochet d'encliquetage (16) forme un bord libre d'encliquetage (17) qui est agencé à l'opposé d'une extrémité libre (15) de la paroi d'arc (14), dans laquelle le crochet d'encliquetage (16) et son bord libre (17) d'une part et la rainure d'encliquetage (27) et le gradin d'encliquetage (28) formé à partir de celle-ci d'autre part forment les moyens d'encliquetage correspondants de la partie de fermeture (6) et de la partie de verrouillage (25).

8. Console selon la revendication 7, **caractérisée en ce que** le crochet d'encliquetage (16) à partir de son bord d'encliquetage (17) et le gradin d'encliquetage (28) sont formés avec une contre-dépouille correspondante de telle sorte que les contre-dépouilles s'enclenchent lors de l'encliquetage.

9. Console selon l'une quelconque des revendications précédentes, **caractérisée en ce que**, pour le renforcement, les parties non mobiles de la console (1), en particulier la paroi de base (3), la première paroi latérale (4) et la deuxième paroi latérale (5), présentent une nervure de renforcement (31) commune ou une pluralité de nervures de renforcement (31) séparées, qui, sur l'extérieur et orthogonalement au plan de la paroi correspondante (3,4,5,25), s'étendent vers l'extérieur et assurent ainsi le renforcement.

10. Console selon la revendication 6 ou selon l'une quelconque des revendications précédentes, dans la mesure où celle-ci se réfère à la revendication 6, **caractérisée en ce que** la partie de verrouillage (25) forme, entre le gradin d'encliquetage (28) et le bord libre (26), une surface de coulissement et de recherche (29) pour recevoir et guider une surface extérieure du crochet d'encliquetage (16) de la partie de fermeture (6).

11. Console selon la revendication 10, **caractérisée en ce que** la surface de coulissement et de recherche (29) s'étend ou est agencée de telle sorte que, lorsque la partie de fermeture (6) est pivotée, une surface extérieure du crochet d'encliquetage (16) coulisse le long de la surface de recherche (29), dans laquelle la surface de recherche (29) a un profil arqué de telle sorte que la partie de fermeture (6) ou la paroi d'arc (14) est repliée élastiquement et, après avoir passé le bord libre (16) du gradin d'encliquetage (28), est dévié élastiquement dans la rainure (27), et/ou la partie de verrouillage (25) se déplace élastiquement vers l'extérieur.

12. Console selon la revendication 4 ou selon l'une quelconque des revendications précédentes, dans la mesure où celle-ci se réfère à la revendication 4, **caractérisée en ce qu'**un support de butée (18) est présent, sur une surface de la paroi plane (12) de la partie de fermeture (6) opposée à la paroi d'arc (14), la paroi plane servant de levier de pivotement qui limite le pivotement de la partie de fermeture (6) dans le corps de base en forme de creux (2) .

13. Console selon l'une quelconque des revendications précédentes, **caractérisée en ce que**, sur la surface intérieure de la première paroi latérale (4) et espacée de la paroi de base (3), un support de plateforme articulée (8) s'étendant parallèlement à la paroi de base (3) et espacé de celle-ci est agencé, dans laquelle, sur le support de plateforme articulée (8) et espacé de la paroi latérale (4) sur une paroi (9) opposée à la paroi de base non mobile (3), l'articulation pelliculaire (7) est agencée, qui s'étend sensiblement dans la même direction que la paroi latérale (4), pour l'agencement articulé de la partie de fermeture (6).

14. Console selon l'une quelconque des revendications précédentes, **caractérisée en ce qu'**un moyen de connexion pour connecter une paroi de bâtiment, un plafond de bâtiment, une paroi de carrosserie ou d'autres dispositifs fixes d'un véhicule, d'un aéronef ou d'un bâtiment est agencé sur la console.
